# EUROPÄISCHE PATENTSCHRIFT

(11) **EP 0 907 509 B1**
(45) Veröffentlichungstag und Bekanntmachung des Hinweises auf die Patenterteilung: **22.08.2001**
(21) Anmeldenummer: 97920479.9
(22) Anmeldetag: 21.05.1997
(51) Int. Cl.: B32B 31/00, B32B 15/08

(54) **KASCHIERWERK ZUR HERSTELLUNG EINES SCHICHTVERBUNDES**
LAMINATING MECHANISM FOR PRODUCING A LAMINATED COMPOSITE
SYSTEME DE LAMINAGE POUR PRODUIRE UN COMPOSITE STRATIFIE

(30) Priorität: 29.05.1996 EP 96810343
(43) Veröffentlichungstag der Anmeldung: 14.04.1999
(73) Patentinhaber: Alusuisse Technology & Management AG, 8212 Neuhausen am Rheinfall (CH)
(72) Erfinder: WATRINET, Hanns, Benton, KY 42025 (US); GABI, Urs, CH-8212 Neuhausen am Rheinfall (CH)
(86) Internationale Anmeldenummer: CH9700197
(87) Internationale Veröffentlichungsnummer: WO9745260

(56) Entgegenhaltungen:
- EP-A- 0 153 220
- EP-A- 0 356 837
- EP-A- 0 453 697
- EP-A- 0 485 896
- EP-A- 0 495 646
- US-A- 5 158 831
- PATENT ABSTRACTS OF JAPAN vol. 8, no. 174 (M-316), 10.August 1984 & JP 59 068214 A (ASAHI KASEI KOGYO KK), 18.April 1984,

## Beschreibung

Die Erfindung betrifft ein Kaschierwerk mit den Merkmalen des Oberbegriffs von Anspruch 1.

Bei heute üblichem Walzenkaschieren einer oder mehrerer Kernschichten mit ein- oder beidseitigen Deckschichten zur Herstellung von Schichtverbunden, wie beispielsweise mit Metallblechen beplankte Kernschichten aus Kunststoff, werden die miteinander zu verbindenden Schichten als Bänder zusammengeführt und zwischen zwei Walzen im Walzenspalt mit dem gewünschten Kaschierdruck beaufschlagt. Da der Kaschiervorgang nur im Walzenspalt stattfinden kann und demzufolge die Kaschierstrecke sehr kurz ist, kann mit einem herkömmlichen Zweiwalzen-Kaschierwerk nur ein geringer Wärmeeintrag in den Schichtverbund und demzufolge nur eine geringe Produktionsgeschwindigkeit erreicht werden. Eine Erhöhung der Produktionsgeschwindigkeit ergibt sich beim Einsatz einer Doppelbandpresse. Die Investitionskosten für eine Doppelbandpresse sind jedoch gegenüber einem Walzenkaschierwerk sehr viel höher.

Ein Kaschierwerk der eingangs genannten Art ist aus der EP-A-0 453 697 bekannt.

Vor dem Hintergrund dieses Standes der Technik liegt der Erfindung die Aufgabe zugrunde, ein verbessertes Kaschierwerk der eingangs genannten Art zu schaffen, mit welchem die Produktionsgeschwindigkeit im Vergleich zu herkömmlichen Zweiwalzen-Kaschierwerken erheblich verbessert werden kann.

Zur erfindungsgemässen Lösung der Aufgabe führt ein Kaschierwerk mit den Merkmalen von Anspruch 1.

Die Kaschierwalzen werden bevorzugt einzeln angetrieben und sind zweckmässigerweise auch individuell beheizbar. Zur Erhöhung der Anpresskraft während der Umschlingung kann zusätzlich zumindest eine Deckschicht vor dem Einlaufen in den ersten Walzenspalt gebremst werden. Diese Art der Erhöhung der Anpresskraft ist vor allem zur Herstellung technischer Laminate mit zugfesten Deckschichten aus z.B. Aluminium, Stahl sowie reissfesten Geweben geeignet. Ueber die Abzugskraft der Deckschichten wird durch Umlenkung eine Anpresskraft auf die Kaschierwalzen erzeugt. Durch nachfolgende Umschlingungen der Walzen wird die für eine höhere Produktionsgeschwindigkeit erforderliche längere Kontaktzeit des Schichtverbundes mit den Kaschierwalzen zusätzlich erhöht. Ein allenfalls notwendiger Kaschierdruck ergibt sich beim Durchlaufen der Walzenspalten, deren Höhe entsprechend dem gewünschten Druck eingestellt wird.

Die Deckschichten und/oder die Kernschicht können bereits vor dem Einlauf in den ersten Walzenspalt durch teilweise Umschlingung der Kaschierwalzen aufgewärmt werden. Auf diese Weise kann sich ein Teilverbund aus z.B. einer Deckschicht und einer an diese angrenzenden Kernschicht bereits vor dem Einlauf in den ersten Walzenspalt ausbilden.

Der Mindestdurchmesser der Kaschierwalzen wird so gewählt, dass die Deckschichten ihre materialspezifischen Dehngrenzen im Schichtverbund während der Umschlingung bzw. Umlenkung nicht überschreiten, so dass die auf das Produkt übertragene Walzenkrümmung wieder zurückgestellt werden kann.

Bei einem einfachen und kostengünstigen Kaschierwerk sind drei Kaschierrollen etwa L-förmig angeordnet. Die in einem Maschinenrahmen schwenk- bzw. kippbar angeordenten Kaschierrollen können beispielsweise in einem im Maschinenrahmen gelagerten Rahmen angeordnet sein, der über eine am Maschinenrahmen gegengelagerte Spindel schwenk- bzw. kippbar ist. Selbstverständlich können auch die Kaschierwalzen selbst gegeneinander schwenk- bzw. kippbar angeordnet sein. Durch die einfache Möglichkeit zur Veränderung der Umschlingungsverhältnisse können Anpresskräfte und Kontaktzeiten zwischen Schichtverbund und Kaschierwalzen optimal und schnell eingestellt werden.

Das erfindungsgemässe Kaschierwerk umfasst im einfachsten Fall drei Kaschierrollen, wobei deren Anzahl nicht beschränkt ist.

Das erfindungsgemässe Kaschierwerk ist geeignet zur Herstellung von Schichtverbunden aller Art. Ein bevorzugtes Anwendungsgebiet liegt bei den Metall/Kunststoff/Metall-Verbunden, die infolge der hohen Zugfestigkeit ihrer Deckschichten eine hohe Anpresskraft auf die Kaschierwalzen ermöglichen.

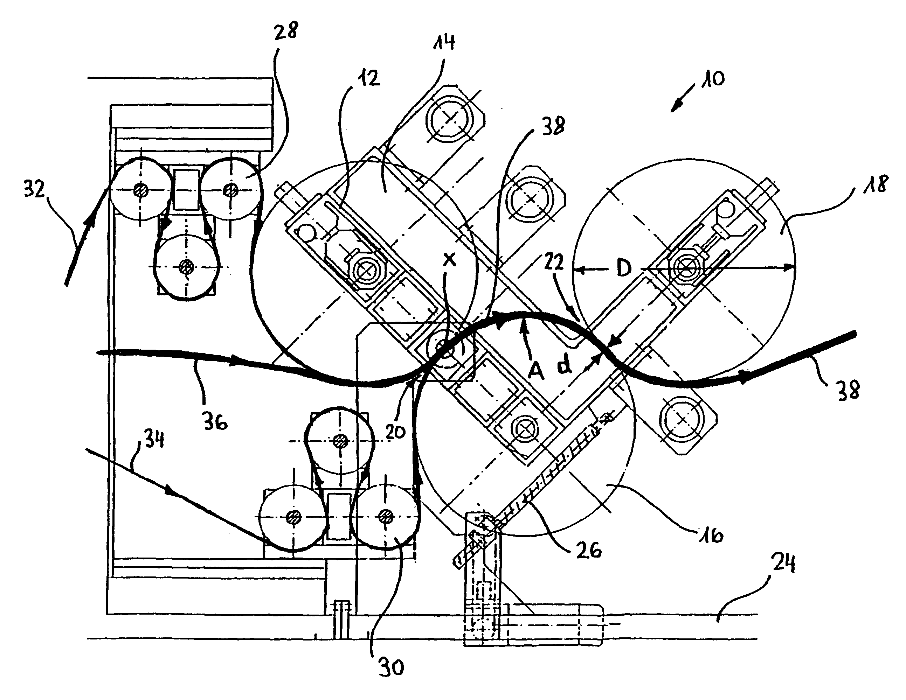

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in ihrer einzigen Figur einen Querschnitt durch ein Kaschierwerk.

Ein Kaschierwerk 10 weist zwei L-förmige Rahmenteile 12 auf, zwischen denen drei Kaschierwalzen 14, 16, 18 gelagert sind.

Entsprechend der L-Form der Rahmenteile 12 sind auch die Kaschierwalzen 14, 16, 18 L-förmig zueinander angeordnet, wobei jeweils zwei einander benachbarte Kaschierwalzen 14, 16, bzw. 16, 18 je einen Walzenspalt 20, 22 bilden.

Die L-förmigen Rahmenteile mit den Kaschierwalzen 14, 16, 18 sind um eine Schwenkachse x kipp- bzw. schwenkbar in einem Maschinenrahmen 24 angeordnet. Zur Einstellung des Kippwinkels dient eine Spindel 26, die einerseits an einem der Rahmenteile 12 festgelegt und andererseits am Maschinenrahmen 24 gegengelagert ist.

Zwei Deckschichten 32, 34 durchlaufen je einen Vorwärmrollensatz 28, 30 und werden von der Oberfläche der Kaschierwalzen 14, 16 dem ersten Walzenspalt 20 zugeführt. Zusammen mit einer zwischen die Deckschichten 32, 34 geführten Kernschicht 36 ergibt sich ein Schichtverbund 38, der nach dem Durchlauf des ersten Walzenspaltes 20 der Oberfläche der zweiten Kaschierwalze 16 anliegt und in der Folge den zweiten Walzenspalt 22 durchläuft.

Im vorliegenden Fall wird die Deckschicht 32 nach dem Austritt aus dem Vorwärmrollensatz 28 mit der Oberfläche der ersten Kaschierwalze 14 in Kontakt gebracht, d.h. die Deckschicht 32 umschlingt die Kaschierwalze 14 bereits vor dem Eintritt in den ersten Walzenspalt 20. Auch die Kernschicht 36 wird so zugeführt, dass sie bereits vor dem Einlauf in den ersten Walzenspalt 20 der bereits auf der Oberfläche der Kaschierwalze 14 anliegenden Deckschicht 32 anliegt. Dadurch ergeben sich für den bereits vor dem ersten Walzenspalt 20 gebildeten Teilverbund aus Deckschicht 32 und Kernschicht 36 ideale Bedingungen bezüglich des Wärmeeintrags. In gleicher Weise erfolgt eine weitere Aufwärmung der Deckschicht 34 nach dem Verlassen des Vorwärmrollensatzes 30 durch eine ebenfalls vor dem Eintritt in den ersten Walzenspalt 20 erfolgende Teilumschlingung der Kaschierwalze 16. Daraus ergeben sich auch für die Deckschicht 34 ideale Bedingungen für den Wärmeeintrag. Nach dem Austritt aus dem ersten Walzenspalt 20 erfolgt eine weitergehende Verbindung der Einzelschichten 32, 34, 36 zum Schichtverbund 38 während der nachfolgenden Umschlingung der Kaschierwalze 16 im Auflagebereich A als Folge der idealen Vorwärmbedingungen bereits nach einer kurzen Kontaktzeit, so dass mit diesen Massnahmen eine weitere Erhöhung der Produktionsgeschwindigkeit möglich wird. Die Endverpressung des Schichtverbundes 38 erfolgt im zweiten Walzenspalt 22.

Die Deckschichten 32, 34 werden als Bänder von in der Zeichnung nicht dargestellten Vorratsrollen, die zur Straffung der Bänder mit Bremsen ausgerüstet sind, abgewickelt. Die Kernschicht 36 kann beispielsweise direkt von einem Extruder zugeführt werden, wobei eine gegebenenfalls erforderliche Straffung mittels Bremsrollen erfolgen kann. Die Kernschicht kann auch aus mehreren Teilschichten bestehen und z.B. beidseitig mit einer Klebstoffschicht bzw. -folie versehen sein.

Die Kaschierwalzen 14, 16, 18 können einzeln angetrieben und beheizt werden. Dadurch ergibt sich einerseits die Möglichkeit, in Zusammenwirkung mit den Bremsen der Vorratsrollen die Anpresskraft auf den Schichtverbund 38 im Auflagebereich A auf der mittleren Kaschierwalze 16 zwischen den beiden Walzenspalten 20, 22 sowie generell im Umschlingungsbereich der Kaschierwalzen 14, 16, 18 einzustellen. Andererseits wird durch die Umschlingung der Kaschierwalzen 14, 16, 18 mit den Deckschichten 32, 34 bzw. dem Schichtverbund 38 die Kontaktfläche und damit die Kontaktdauer mit den Kaschierwalzen wesentlich erhöht, was eine bessere Wärmeübertragung von den Walzen auf die Bänder und damit auch eine höhere Produktionsgeschwindigkeit ermöglicht. Durch die einzeln regelbaren Umlaufgeschwindigkeiten der Kaschierwalzen 14, 16, 18 können auch Spannungen in den Deckschichten 32, 34, die sich als Folge der Walzenkrümmung ergeben, zumindest teilweise kompensiert werden.

Der Durchmesser D der Kaschierwalzen 14, 16, 18 beträgt beispielsweise 1000 mm. Der minimale Durchmesser wird bestimmt durch die maximal zulässige Krümmung des Schichtverbundes 38. Die Höhe d der Walzenspalten 20, 22 richtet sich nach der Dicke des herzustellenden Schichtverbundes 38 sowie nach dem gewünschten Kaschierdruck im Walzenspalt.

Mit dem Kaschierwerk 10 lassen sich z.B. Schichtverbunde 38 mit einer Kernschicht aus Polypropylen sowie Deckschichten aus Aluminium mit einer Gesamtdicke bis zu etwa 4 mm oder sogar dicker herstellen.

Aus der Zeichnung ist ohne weiteres ersichtlich, dass das Kaschierwerk 10 auf einfache Weise auch durch Umrüsten eines bestehenden Zweiwalzen-Kaschierwerkes erhalten werden kann.

## Patentansprüche

1. Kaschierwerk mit mindestens drei in Serie aneinandergereihten Kaschierwalzen (14,16,18), wobei eine Kaschierwalze (16) mit zwei angrenzenden Kaschierwalzen (14,18) zwei Walzenspalten (20,22) bildet, zur Herstellung eines Schichtverbundes (38) aus einer Kernschicht (36) aus Kunststoff mit zwei Deckschichten (32,34) aus Aluminium oder Stahl, wobei die miteinander zu verbindenden Schichten als Bänder zusammenführbar und zwischen den Kaschierwalzen im Walzenspalt durch Einstellen der Spalthöhe (d) mit dem gewünschten Kaschierdruck beaufschlagbar sind,
dadurch gekennzeichnet, dass
drei Kaschierwalzen (14,16,18) etwa L-förmig zueinander stehen und in einem Maschinenrahmen (24) schwenk- bzw. kippbar angeordnet sind.

2. Kaschierwerk nach Anspruch 1, dadurch gekennzeichnet, dass die Kaschierwalzen (14,16,18) in einem im Maschinenrahmen (24) gelagerten Rahmen (12) angeordnet sind, der über eine am Maschinenrahmen (24) gegengelagerte Spindel (26) schwenk- bzw. kippbar ist.

3. Kaschierwerk nach einem der Ansprüche 1 oder 2, dadurch gekennzeichnet, dass die Kaschierwalzen (14,16,18) gegeneinander schwenk- bzw. kippbar angeordnet sind.

4. Kaschierwerk nach einem der Ansprüche 1 bis 3, dadurch gekennzeichnet, dass die Kaschierwalzen (14,16,18) einzeln antreibbar sind.

5. Kaschierwerk nach einem der Ansprüche 1 bis 4, dadurch gekennzeichnet, dass die Kaschierwalzen (14,16,18) einzeln beheizbar sind.

## Claims

1. Laminating unit with at least three laminating rolls (14, 16, 18) arranged in series, one laminating roll (16) forming two nips (20, 22) with two adjacent laminating rolls (14, 18), for the production of a laminated composite (38) consisting of a plastic core (36) with two outer layers (32, 34) made of aluminium or steel, wherein the layers to be joined together can be brought together in the form of strips and the desired laminating pressure can be applied thereto between the laminating rolls in the nip by adjusting the nip height (d), characterised in that three laminating rolls (14, 16, 18) are situated in an approximately L-shaped arrangement and are pivotably or tiltably arranged in a machine frame (24).

2. Laminating unit according to claim 1, characterised in that the laminating rolls (14, 16, 18) are arranged in a frame (12) which is mounted in the machine frame (24) and is pivotable or tiltable via a spindle (26) mounted on the machine frame (24).

3. Laminating unit according to either claim 1 or claim 2, characterised in that the laminating rolls (14, 16, 18) are arranged so that they can pivot or tilt relative to one another.

4. Laminating unit according to one of claims 1 to 3, characterised in that the laminating rolls (14, 16, 18) can be driven separately.

5. Laminating unit according to one of claims 1 to 4, characterised in that the laminating rolls (14, 16, 18) can be heated separately.

## Revendications

1. Machine de plaquage, comprenant au moins trois cylindres de placage (14, 16, 18) disposés en série les uns à la suite des autres, l'un des cylindres de placage (16) formant avec deux cylindres de placage adjacents (14, 18) deux intervalles (20, 22), pour la production d'un composite laminaire (38) comprenant une couche d'âme (36) en matière plastique et deux couches de revêtement (32, 34) en aluminium ou en acier, les couches à relier les unes aux autres étant alimentées sous forme de bandes et attaquées sous la pression de placage souhaitée dans l'intervalle entre les cylindres de placage en réglant l'épaisseur de l'intervalle (d),
caractérisée en ce qu'il est prévu trois cylindres de placage (14, 16, 18) disposés approximativement en forme de L les uns par rapport aux autres, et agencés en basculement, ou respectivement en pivotement, dans un châssis de machine (24).

2. Machine de plaquage selon la revendication 1, caractérisée en ce que les cylindres de placage (14, 16, 18) sont agencés dans un cadre (12) monté dans le châssis de machine (24), ledit cadre étant susceptible de basculer ou de pivoter par l'intermédiaire d'une broche (26) montée sur le châssis de machine (24).

3. Machine de plaquage selon l'une ou l'autre des revendications 1 et 2, caractérisée en ce que les cylindres de placage (14, 16, 18) sont agencés en basculement ou en pivotement les uns par rapport aux autres.

4. Machine de plaquage selon l'une des revendications 1 à 3, caractérisée en ce que les cylindres de placage (14, 16, 18) sont susceptibles d'être entraînés individuellement.

5. Machine de plaquage selon l'une des revendications 1 à 4, caractérisée en ce que les cylindres de placage (14, 16, 18) sont susceptibles d'être chauffés individuellement.
